(19) Europäisches Patentamt
European Patent Office
Office européen des brevets

(11) Numéro de publication: **0 219 147**
A1

(12) # DEMANDE DE BREVET EUROPEEN

(21) Numéro de dépôt: 86201508.8

(22) Date de dépôt: 02.09.86

(51) Int. Cl.⁴: **B 60 T 8/18**

(30) Priorité: 12.09.85 IT 6777185

(43) Date de publication de la demande:
22.04.87 Bulletin 87/17

(84) Etats contractants désignés:
AT BE DE FR GB

(71) Demandeur: WEBER S.p.A. AZIENDA ALTECNA
Via Giacosa 38
I-10125 Torino(IT)

(72) Inventeur: Errico, Angelantonio
Via Molfetta 1a traversa 12 D
I-70054 Giovinazzo Bari(IT)

(72) Inventeur: Tribuzio, Pasquale, Dr. Ing.
Via Ammiraglio Vacca 37/M
I-70032 Bitonto Bari(IT)

(74) Mandataire: Patrito, Pier Franco, Dr. Ing.
Cabinet PATRITO BREVETTI Via Don Minzoni 14
I-10121 Torino(IT)

(54) Dispositif de fermeture pour une soupape régulatrice du freinage d'un véhicule.

(57) Un dispositif de fermeture pour une soupape régulatrice du freinage d'un véhicule, asservie à la charge du véhicule lui-même, comprenant un bouchon (17) accouplé à glissement avec l'extrémité correspondante de la cavité (2-3) du corps (1) de la soupape, un moyen de retenue (19) agissant entre le bouchon (17) et l'extrémité du corps (1) de la soupape dans le sens de retenir le bouchon dans sa position insérée, et une garniture (20) en matériau élastomérique inséreé entre le bouchon (17) et la cavité du corps (1) de la soupape à courte distance de l'extrémité de la partie hydrauliquement opérative de la cavité (2-3) du corps de la soupape. Le moyen de retenue (19) peut être constitué par un anneau élastique installé dans un évidement annulaire (6) du corps de la soupape. La garniture (20) en matériau élastomérique est disposée pour être comprimée entre deux épaulements prédisposés respectivement sur le bouchon (17) et dans la cavité du corps (1) de la soupape, lorsque le bouchon est dans sa position insérée, et le bouchon se prolonge vers l'intérieur pour former d'une seule pièce une douille (18) entourant le piston (8) de la soupape et constituant un appui pour une garniture annulaire (7) montée à l'intérieur de la soupape.

FIG. 2

EP 0 219 147 A1

# DISPOSITIF DE FERMETURE POUR UNE SOUPAPE REGULATRICE DU FREINAGE D'UN VEHICULE

L'invention concerne un dispositif de fermeture pour une soupape régulatrice du freinage d'un véhicule, asservie à la charge du véhicule lui-même.

Comme on le sait, le but des soupapes du genre en question est de limiter l'action de freinage des roues arrière d'un véhicule, de sorte qu'elle ne dépasse pas l'adhérence de ces roues dans les conditions de charge existant au moment du freinage. Ces soupapes présentent un corps creux divisé par une garniture annulaire en deux chambres; ces chambres sont reliées, l'une à un maître-cylindre qui au moment du freinage refoule de l'huile sous pression soit à la soupape régulatrice que directement aux cylindres des freins des roues avant, et l'autre aux cylindres des freins des roues arrière. Avec cette garniture coopère un piston, sur l'entière section duquel agit la pression de la chambre reliée aux cylindres des freins des roues arrière, dans le sens qui pousse ce piston à fermer contre ladite garniture annulaire, tandis que sur une partie de la section du piston agit la pression de la chambre connectée au maître-cylindre, dans le sens qui tend à éloigner le piston de la garniture. Dans ce même sens agissent aussi un ressort qui applique une force costante, et une transmission connectée aux suspensions arrière du véhicule, laquelle applique une force croissante en raison de l'accroissement de la charge agissant effectivement sur les roues arrière, et qui à son tour dépend de la charge du véhicule et de l'accélération à laquelle ce dernier est soumis. En proportionnant d'une façon appropriée les différentes parties de la soupape on peut obtenir qu'une pression croissante, produite par le maître-cylindre, soit transmise intégralement aux cylindres des roues arrière seulement jusqu'à ce que l'action de freinage exercée sur ces dernières reste inférieure à l'adhérence correspondante à la charge qui à l'instant considéré est appliquée effectivement sur elles, mais qu'en s'approchant à la limite d'adhérence une augmentation ultérieure de la pression ne soit pas transmise aux cylindres des freins des roues arrière, à cause de la fermeture produite par le piston sur la garniture annulaire qui sépare l'une de l'autre les deux chambres de la soupape.

Des conditions pour un fonctionnement correct de cette soupape sont, entre autres, qu'elle ne donne pas lieu à un emprisonnement excessif d'air, ou bien, respectivement, qu'elle permette après l'installation une purge facile de presque la totalité de l'air contenu, et qu'elle ne donne pas lieu à des pertes de liquide du circuit de freinage, cela même long temps après son installation. De plus on exige, pour des raisons d'économie industrielle, que le prix de revient des composants de la soupape soit le plus réduit possible, et que ces composant soient appropriés pour être montés facilement et rapidement tant dans le cas d'un montage manuel qu'automatisé.

Bien entendu, le corps creux de ces soupapes exige la présence d'un dispositif de fermeture; habituellement, ce dernier est formé par un bouchon fileté vissé dans une extrémité du corps de la soupape. Le bouchon sert aussi comme butée de fin de course pour le piston, et il retient une douille entourant le piston de la soupape et s'étendant entre le bouchon et la garniture annulaire qui divise les deux chambres de la soupape. Ce bouchon vissé constitue la source de différents inconvénients. L'opération de filetage du bouchon et de l'extrémité correspondante de la cavité du corps de la soupape est relativement coûteuse. L'opération de vissage du bouchon, pendant le montage de la soupape, est relativement longue et laborieuse et elle se prête mal à la mécanisation. L'étanchéité du bouchon est établie au moyen d'une garniture de cuivre située à l'extrémité extérieure du filetage, et avec le temps cette garniture, à cause de phénomènes de tassement, perd en partie ses propriétés d'étanchéité et, dû à l'alternance des cycles de pression et de dépression dans le corps de la soupape, elle donne lieu à des transsudations de liquide du circuit de freinage et, respectivement, à l'entrée d'air. D'autre part, l'installation d'une garniture en matériau élastomérique au lieu d'une garniture en cuivre, dans le cas d'un bouchon vissé, demanderait des conformations spéciales telles à accroître les coûts de fabrication. Surtout, le jeu nécessairement existant entre le filetage mâle du bouchon et le filetage femelle du corps de la soupape définit un long méat communiquant avec une chambre de la soupape et se terminant dans un espace annulaire relativement capable, déterminé par le surbaissement, nécessaire pour des raisons d'usinage, de l'extrémité du filetage du bouchon. Au début, ce dernier espace et le méat sont pleins d'air, et il n'existe aucune manière systématique pour éliminer cet air après l'installation de la soupape, de sorte que cet air reste entrappé, il constitue un poumon pneumatique et il accroit d'une façon indésirable la valeur d'absorption de la soupape.

Le but de la présente invention est de réaliser un dispositif de fermeture pour une soupape du type spécifié qui puisse remplacer le bouchon fileté habituel en éliminant ou en réduisant les inconvénients auxquels il donne lieu.

Ce but est atteint, selon l'invention, par le fait que le dispositif de fermeture comprend un bouchon accouplé à glissement avec l'extrémité correspondante de la cavité du corps de la soupape, un moyen de retenue agissant entre ledit bouchon et l'extrémité du corps de la soupape dans le sens de retenir le bouchon dans sa position insérée, et une garniture en matériau élastomérique insérée entre ledit bouchon et la cavité du corps de la soupape à courte distance de l'extrémité de la partie hydrauliquement opérative de la cavité du corps de la soupape.

De préférence, ledit moyen de retenue est constitué par un organe élastique prédisposé pour s'accrocher à une contre-dépouille présentée par la cavité du corps de la soupape. De préférence, aussi, ladite garniture en matériau élastomérique est prédisposée pour être comprimée entre deux épaulements disposés, respectivement, sur le bouchon et dans la cavité du corps de la soupape, lorsque le bouchon est dans sa position

insérée.

Grâce à ces caractéristiques, on peut éviter toute opération de filetage, soit du bouchon que de la cavité du corps de la soupape, en réduisant ainsi les coûts de production de ces parties. Le montage du bouchon a lieu moyennat une opération de simple insertion axiale du bouchon et du moyen de retenue, laquelle peut être effectuée facilement et rapidement soit manuellement, soit par des appareillage automatiques. L'absence de parties filetées évite la formation d'un méat se terminant dans une chambre capace, et ce méat est remplacé par un interstice cylindrique étroit contenant une petite quantité d'air qui, en outre, s'échappe facilement pendant l'opération de purge de le soupape. La disposition de la garniture d'étanchéité voisin de l'extrémité de la partie hydrauliquement opérative de la cavité du corps de la soupape minimise jusque'à l'annulation la capacité dudit interstice cylindrique et, par conséquent, la quantité d'air qui y est contenu. La garniture en matériau élastomérique est disposée dans les meilleures conditions pour assurer une étanchéité parfaite se prolongeant pour un temps indéterminé. De plus, cette garniture en matériau élastomérique, qui est comprimée au moment du montage, recouvre ensuite une fraction de sa propre compression en exerçant une force de répulsion sur le bouchon et sur ses moyens de retenue, de sorte que tout jeu existant est rattrapé et le bouchon est ensuite retenu d'une façon permanente dans une position exactement prédeterminée, en empêchant ainsi tout déplacement du bouchon sous l'action des pressions et des dépressions d'exercice. Le dispositif de fermeture selon l'invention permet donc, en même temps, de réduire le prix de revient de la soupape et d'en améliorer les caractéristiques organiques et fonctionnelles.

L'invention pourra être mieux comprise à l'aide de la suivante description de deux formes de réalisation, données à titre d'exemples non limitatifs et représentées schématiquement dans le dessin annexé, dans lequel:

Fig. 1 représente une soupape régulatrice du freinage d'un véhicule, asservie à la charge du véhicule lui-même, vue de la part des raccords de connection au circuit hydraulique de freinage;

Fig. 2 en montre une section axiale; et

Fig. 3 illustre, d'une façon similaire de celle de la figure 2, une autre forme de réalisation.

Par le numéro 1 est indiqué le corps creux de la soupape, dont la cavité est divisée en deux chambres 2 et 3 par une garniture annulaire 7. Le corps 1 présente un premier raccord 4, communiquant avec la chambre 2, lequel est destiné à être relié par une tubulure au maître-cylindre du circuit hydraulique de freinage, et un deuxième raccord 5, communiquant avec la chambre 3, lequel est destiné à être connecté à l'aide de tubulures aux cylindres des freins des roues arrière. Dans la chambre 3 du corps 1 est disposé un piston 8, une face duquel est appropriée pour établir une fermeture étanche contre la garniture annulaire 7. La tige 9 du piston 8 passe à travers la garniture annulaire 7 et la chambre 2, et elle sort du corps 1 (d'une façon étanche grâce à la présence d'une garniture 12), en se terminant avec une fourchette 10. Cette fourchette est destinée à recevoir l'action d'une transmission reliée aux suspensions arrière du véhicule. L'accouplement à glissement entre la tige 9 et le corps 1 est protégé par une coiffe de protection en caoutchouc 13, retenue en position par un collier 14. La tige 9 du piston 8 présente des appendices radiaux 11, disposés, par rapport à la garniture 7, du côté opposé au piston 8. Dans la chambre 2, une douille 15 est poussée par un ressort 16 contre les appendices 11 de la tige 9. La structure décrite jusqu'ici correspond substantiellement à celle, connue, des soupapes régulatrices en question, et elle réalise le fonctionnement, également connu, qui est mentionné dans l'introduction à la présente description et qui ne sera pas décrit ultérieurement. Dans les constructions connues, la chambre 3 est fermée par un bouchon fileté vissé dans l'extrémité extérieure, elle-aussi filetée, de la chambre 3, et dont un épaulement externe détermine l'étanchéité, au moyen d'une garniture annulaire en cuivre, avec l'extrémité correspondante du corps 1, en donnant ainsi lieu aux inconvénients mentionnés. En outre, ledit bouchon fileté forme une butée de fin de course pour le piston 8 et il retient en position, autour du piston, une douille séparée qui sert à définir la position de la garniture annulaire 7. Dans les constructions connues, cette douille ne pourrait pas être réalisée d'une seule pièce avec le bouchon fileté parce que, à cause de l'addition des tolérances d'usinage relatives aux filetages, on ne pourrait pas assurer avec un jeu suffisamment réduit la coaxialité de la douille par rapport au corps de la soupape.

Selon l'invention, la fermeture de la chambre 3 du corps 1 de la soupape est assurée par un bouchon 17 accouplé à glissement avec la cavité du corps 1 et maintenu dans sa position insérée par un moyen de retenue, tel qu'un anneau élastique 19, inséré à encliquetage élastique dans un évidement annulaire correspondant du corps 1, qui lui offre un épaulement d'appui. L'étanchéité est assurée par une garniture 20 en matériau élastomérique, disposée à proximité de l'extrémité de la partie hydrauliquement opérative de la chambre 3 et comprimée (dans la condition insérée du bouchon) entre des épaulements correspondants du bouchon 17 et de la chambre 3 du corps 1. Cette conformation du dispositif de fermeture, qui autorise une fabrication et un montage faciles et économiques, assure une étanchéité durable et réduit au minimum, pratiquement au zero, l'emprisonnement d'air dans la partie d'interstice entre le corps 1 et le bouchon 17, entre la chambre 3 et la garniture 20, en réalisant ainsi le but indiqué de la présente invention.

La garniture 20, comprimée au moment de l'introduction du bouchon 17, exerce ensuite d'une façon permanente sur ce dernier une poussée dirigée vers l'extérieur, grâce à laquelle est rattrapé tout jeu entre le bouchon 17 et l'anneau élastique 19, et entre ce dernier et l'évidement annulaire respectif du corps 1, et le bouchon 17 assume et conserve en permanence une position bien définie, qui ne peut pas être modifiée par les variations de la pression d'exercice.

Un avantage ultérieur de la conformation selon l'invention consiste en ce que la douille 18, qui entoure le piston et offre un appui à la garniture annulaire 7, peut être réalisée avantageusement d'une seule pièce avec le bouchon 17, dont elle constitue un prolongement intérieur. En effet, dans ce cas, en l'absence d'accouplements filetés, le centrage du bouchon 17 a lieu avec précision dans la chambre 3 et il ne donne pas lieu à des problèmes de coaxialité par rapport à ladite chambre. Cette caractéristique réduit ultérieurement le prix de revient des composants de la soupape et elle élimine l'une des opérations habituelles de montage, celle de l'insertion de la douille séparée du bouchon.

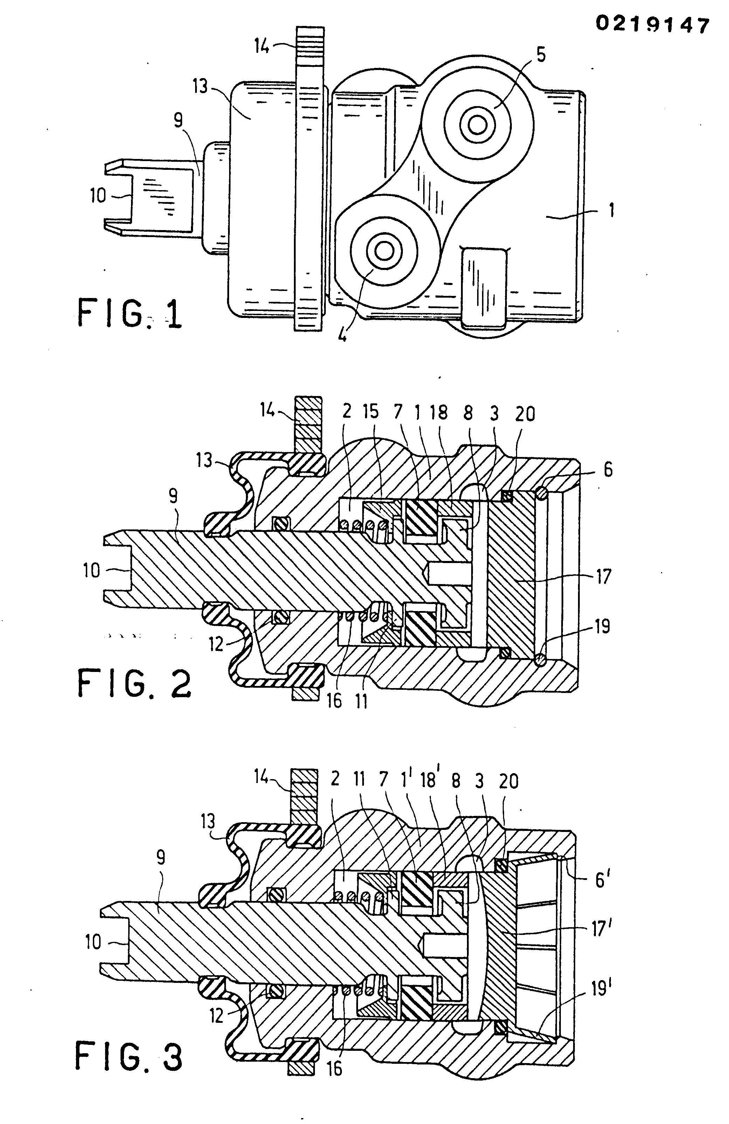

Cependant, la réalisation de la douille 18 sous forme de prolongement du bouchon 17 n'est pas obligatoire, et lorsque, par des raisons particulières, l'on pense qu'il serait préférable, la douille 18' peut constituer un élément séparé du bouchon 17', comme le montre par exemple la figure 3.

L'emploi d'un anneau élastique 19 comme moyen de retenue du bouchon dans sa position insérée présente l'avantage de permettre, en cas de nécessité, le démontage de la soupape. Cependant, cette nécessité ne doit pas toujours être prévue, et l'on peut aussi réaliser la construction d'une façon telle que le bouchon, une fois qu'il a été inséré dans le corps 1 de la soupape, ne puisse plus en être retiré. Dans ce cas l'on peut adopter la forme de réalisation modifiée selon la figure 3. Le moyen de retenue pour le bouchon 17' est constitué par une couronne d'appendices élastiques 19' du bouchon 17', divergents et appropriés pour coopérer avec un épaulement 6' présenté par le corps 1' de la soupape. Dans ce cas, la simple insertion du bouchon 17' dans le corps 1' donne lieu aussi à la retenue définitive du bouchon dans la position insérée, et de ce fait on élimine l'opération séparée de montage de l'anneau élastique 19.

Bien entendu, des différentes modifications et des substitutions par des équivalents techniques peuvent être appliquées à ce qui a été décrit et illustré, sans s'éloigner du cadre de l'invention. En particulier, les dispositions intérieures de la soupape pourraient être différentes de celles décrites à titre d'exemple, sans interférer avec l'application de l'invention, laquelle concerne seulement le dispositif de fermeture de la soupape. En outre, ce dispositif de fermeture pourrait être appliqué dans tous les autres dispositifs hydrauliques présentant, sous ce point de vue, des exigences similaires de celles du genre de soupape en question.

REVENDICATIONS

1 . Dispositif de fermeture pour une soupape régulatrice du freinage d'un véhicule, asservie à la charge du véhicule lui-même, caractérisé en ce qu'il comprend un bouchon (17,17') accouplé à glissement avec l'extrémité correspondante de la cavité (2-3) du corps (1,1') de la soupape, un moyen de retenue (19,19') agissant entre ledit bouchon (17,17') et l'extrémité du corps (1) de la soupape dans le sens de retenir le bouchon dans sa position insérée, et une garniture (20) en matériau élastomérique insérée entre ledit bouchon (17,17') et la cavité du corps (1) de la soupape à courte distance de l'extrémité de la partie hydrauliquement operative de la cavité (2-3) du corps (1) de la soupape.

2 . Dispositif de fermeture selon la revendication 1, caractérisé en ce que ledit moyen de retenue est constitué par un organe élastique (19,19') prédisposé pour s'accrocher a une contre-dépouille (6,6') présentée par la cavité du corps (1) de la soupape.

3 . Dispositif de fermeture selon la revendication 2, caractérisé en ce que ledit organe élastique de retenue est constitué par un anneau élastique (19) disposé pour être inséré à encliquetage dans un évidement annulaire correspondant (6) du corps (1) de la soupape.

4 . Dispositif de fermeture selon la revendication 2, caractérisé en ce que l'organe élastique de retenue est formé par une couronne d'appendices élastiques divergents (19'), présentés par le bouchon (17') et disposés pour être accouplés à encliquetage avec un épaulement (6') du corps (1) de la soupape.

5 . Dispositif de fermeture selon la revendication 1, caractérisé en ce que ladite garniture (20) en matériau élastomérique est prédisposée pour être comprimée entre deux épaulements présentés respectivement par

- 10 -                    **0219147**

le bouchon (17,17') et par la cavité du corps (1) de la soupape, lorsque le bouchon est dans sa position insérée.

6 . Dispositif de fermeture selon la revendication 1, pour une soupape comprenant une garniture annulaire (7) et un piston (8) destiné à coopérer avec ladite garniture, insérés dans la cavité (2-3) du corps (1) de la soupape, caractérisé en ce que ledit bouchon (17) s'étend vers l'intérieur en formant d'une seule pièce une douille (18) qui entoure le piston (8) de la soupape et qui offre un appui à la garniture annulaire (7).

0219147

FIG. 1

FIG. 2

FIG. 3

Office européen
des brevets

RAPPORT DE RECHERCHE EUROPEENNE

**0219147**
Numero de la demande

EP  86  20  1508

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int Cl 4) |
|---|---|---|---|
| X | FR-A-2 253 175  (BOSCH)<br>* Page 1, lignes 34-38; figure * | 1-3,5 | B 60 T    8/18 |
| X | FR-A-1 561 693  (GIRLING)<br>*  Page  2, lignes 12-15; page 2, lignes 22-25; figure 1 * | 1,5 | |
| X | GB-A-2 074 674  (TEVES)<br>* En entier * | 1,6 | |
| A | FR-A-2 258 580  (AUTOMOTIVE PRODUCTS)<br>* Page 4, lignes 24-29; figure  1 * | 4 | |

DOMAINES TECHNIQUES
RECHERCHES (Int Cl 4)

B 60 T

Le présent rapport de recherche a été établi pour toutes les revendications

| Lieu de la recherche | Date d achevement de la recherche | Examinateur |
|---|---|---|
| LA HAYE | 15-12-1986 | BLURTON M.D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant

OEB Form 1503 03 82